# EUROPEAN PATENT APPLICATION

(11) **EP 4 749 751 A1**
(43) Date of publication of application: **27.05.2026**
(21) Application number: 24844539.7
(22) Date of filing: 27.06.2024
(51) Int. Cl.: H01M 10/0585

(54) **SECONDARY BATTERY AND ELECTRONIC APPARATUS**

(30) Priority: 21.07.2023 CN 202310902607
(71) Applicant: Ningde Amperex Technology Limited, Ningde, Fujian 352100 (CN)
(72) Inventor: QU, Changming, Ningde, Fujian 352100 (CN); ZOU, Bangkun, Ningde, Fujian 352100 (CN)
(74) Representative: Kraus & Lederer PartGmbB
(86) International application number: PCT/CN2024/102120
(87) International publication number: WO 2025/020845

(57) **Abstract**

This application discloses a secondary battery and an electronic apparatus. The secondary battery includes an electrode assembly. The electrode assembly includes a positive electrode plate, a separator, and a negative electrode plate that are alternately stacked in a thickness direction of the electrode assembly. The negative electrode plate includes a first negative electrode plate and a second negative electrode plate, the first negative electrode plate includes a first current collector and a first negative electrode active material layer provided on at least one surface of the first current collector, the second negative electrode plate includes a second current collector and a second negative electrode active material layer provided on at least one surface of the second current collector, the first negative electrode active material layer includes a first negative electrode active material, the first negative electrode active material includes a silicon-based material, the second negative electrode active material layer includes a second negative electrode active material, and the second negative electrode active material is graphite.

## Description

### TECHNICAL FIELD

This application relates to the field of energy storage apparatuses, and in particular, to a secondary battery and an electronic apparatus.

### BACKGROUND

With the widespread application of electrochemical apparatuses (for example, lithium-ion batteries) in various electronic products, users have increasingly higher requirements for the energy density of electrochemical apparatuses. To this end, silicon-based materials are usually used as negative electrode active materials, because silicon-based materials have a gram capacity as high as 4200 mAh/g. However, when silicon-based materials are used as negative electrode active materials, significant volume changes occur with the intercalation and deintercalation of lithium ions, leading to increased overall swelling and deformation of the lithium-ion batteries. Moreover, silicon has poor electronic conductivity and ionic conductivity, resulting in deteriorated kinetic performance of the lithium-ion battery and easy occurrence of lithium plating, affecting the cycle life.

### SUMMARY

An object of this application is to provide a secondary battery that balances energy density, cycle life, and cycling swelling performance, and an electronic apparatus including the secondary battery.

According to a first aspect of this application, a secondary battery is provided, including an electrode assembly. The electrode assembly includes a positive electrode plate, a separator, and a negative electrode plate that are alternately stacked in a thickness direction of the electrode assembly. The negative electrode plate includes a first negative electrode plate and a second negative electrode plate. The first negative electrode plate includes a first current collector and a first negative electrode active material layer provided on at least one surface of the first current collector. The second negative electrode plate includes a second current collector and a second negative electrode active material layer provided on at least one surface of the second current collector. The first negative electrode active material layer includes a first negative electrode active material. The first negative electrode active material includes a silicon-based material. The second negative electrode active material layer includes a second negative electrode active material. The second negative electrode active material is graphite.

Compared with the case where the negative electrode active materials of the negative electrode plates all include the silicon-based material and graphite, in this application, the negative electrode plates are divided into the first negative electrode plate with the negative electrode active material including a silicon-based material and the second negative electrode plate with the negative electrode active material being graphite, the influence of the silicon-based material on graphite is reduced, and the silicon-based material of the first negative electrode plate does not have effects, such as swelling, cycle attenuation, and lithium plating, on the second negative electrode plate; at the same time, the electrode assembly is configured as a stacked structure, so that the first negative electrode plate including the silicon-based material can be placed at different positions in the electrode assembly, enabling the secondary battery to maintain high energy density while obtaining long cycle life and improving cycling swelling performance. That is, the energy density, cycle life, and cycling swelling performance of the secondary battery of this application are balanced.

According to some embodiments of this application, a content of the silicon element in the first negative electrode active material layer is 5wt% to 50wt%.

According to some embodiments of this application, the content of the silicon element in the first negative electrode active material layer is 5wt% to 30wt%.

According to some embodiments of this application, a coating weight of the first negative electrode active material layer is 2 mg/cm² to 6 mg/cm².

According to some embodiments of this application, a compacted density of the first negative electrode active material layer is 1.1 g/cm³ to 1.4 g/cm³.

According to some embodiments of this application, a coating weight of the second negative electrode active material layer is 8 mg/cm² to 9 mg/cm².

According to some embodiments of this application, in the thickness direction, the first negative electrode plate is located on at least one side of the electrode assembly.

According to some embodiments of this application, in the thickness direction, the first negative electrode plate and the second negative electrode plate are alternately arranged.

According to some embodiments of this application, in the thickness direction, the first negative electrode plate is located in the middle of the electrode assembly.

According to some embodiments of this application, the first negative electrode active material layer includes the following components: 90wt% to 98wt% first negative electrode active material, 2wt% to 6wt% polyacrylic acid, 1wt% to 2wt% sodium carboxymethyl cellulose, and 0.5wt% to 2wt% carbon nanotubes.

According to some embodiments of this application, the second negative electrode active material layer includes the following components: 96wt% to 99wt% second negative electrode active material, 0.5wt% to 2wt% polyacrylic acid or styrene-butadiene rubber, and 0.5wt% to 2wt% sodium carboxymethyl cellulose.

According to a second aspect of this application, an electronic apparatus is further provided, including the above secondary battery.

### BRIEF DESCRIPTION OF DRAWINGS

The above and/or additional aspects and advantages of this application will become apparent and easy to understand from the description of some embodiments with reference to the following drawings, in which:
FIG. 1 is a schematic structural diagram of an electrode assembly provided in an embodiment of this application;
FIG. 2 is a schematic cross-sectional view of the electrode assembly shown in FIG. 1 along II-II;
FIG. 3 is a schematic structural diagram of an electrode assembly provided in another embodiment of this application;
FIG. 4 is a schematic structural diagram of an electrode assembly provided in still another embodiment of this application;
FIG. 5 is a schematic structural diagram of an electrode assembly provided in yet another embodiment of this application;
FIG. 6 is a schematic structural diagram of an electrode assembly provided in still yet another embodiment of this application;
FIG. 7 is a schematic structural diagram of an electrode assembly provided in a further embodiment of this application; and
FIG. 8 is a schematic structural diagram of an electrode assembly provided in a still further embodiment of this application.

Description of main reference signs:
electrode assembly 100;
negative electrode plate 10;
positive electrode plate 20;
first negative electrode plate 11;
second negative electrode plate 12;
first current collector 11a;
first negative electrode active material layer 11b;
second current collector 12a;
second negative electrode active material layer 12b;
positive electrode current collector 21; and
positive electrode active material layer 22.

### DETAILED DESCRIPTION

The technical solutions in some embodiments of this application are clearly and thoroughly described below. Obviously, the described embodiments are some but not all embodiments of this application. Unless otherwise defined, all technical and scientific terms used herein have the same meaning as commonly understood by those skilled in the technical field to which this application pertains. The terms used in the description of this application are only for the purpose of describing specific embodiments, and are not intended to limit this application.

In addition, for brevity and clarity, in the drawings, the dimensions or thicknesses of various components and layers may be exaggerated. Throughout the text, the same signs refer to the same elements. As used herein, the terms "and/or" includes any combination and all combinations of one or more of the associated listed items. In addition, it should be understood that when an element A is referred to as being "connected" to an element B, element A can be directly connected to element B, or there may be an intermediate element C and element A and element B may be indirectly connected to each other.

Further, when describing the embodiments of this application, "may" refers to "one or more embodiments of this application".

The technical terms used herein are for the purpose of describing specific embodiments and are not intended to limit this application. As used herein, the singular forms are intended to also include the plural forms, unless the context clearly indicates otherwise. It should be further understood that the term "comprise", when used in this specification, means that there are features, numbers, steps, operations, elements, and/or components described, but does not exclude the presence or addition of one or more other features, numbers, steps, operations, elements, components, and/or combinations thereof.

It should be understood that, although terms such as first, second, and third may be used herein to describe various elements, components, regions, layers and/or sections, these elements, components, regions, layers and/or sections should not be limited by these terms. These terms are used to distinguish one element, component, region, layer or section from another element, component, region, layer or section. Therefore, the first element, component, region, layer or section discussed below may be referred to as a second element, component, region, layer or section without departing from the teachings of the exemplary embodiments.

An embodiment of this application provides a secondary battery, including a housing and an electrode assembly and an electrolyte accommodated in the housing.

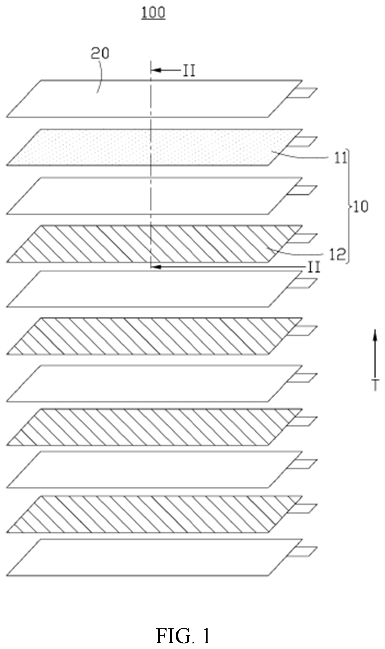

Refer to FIG. 1. The electrode assembly 100 includes a negative electrode plate 10, a positive electrode plate 20, and a separator (not shown) disposed between the negative electrode plate 10 and the positive electrode plate 20. The electrode assembly 100 has a stacked structure. Specifically, the negative electrode plate 10, the separator, and the positive electrode plate 20 are alternately stacked in a thickness direction T of the electrode assembly 100 to form the electrode assembly 100.

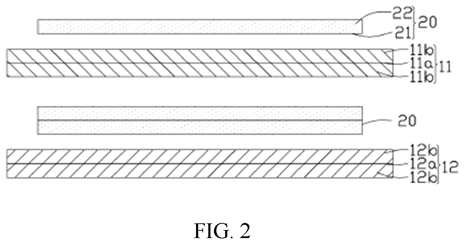

The negative electrode plate 10 includes a first negative electrode plate 11 and a second negative electrode plate 12, and a negative electrode active material of the first negative electrode plate 11 is different from a negative electrode active material of the second negative electrode plate 12. Refer to FIG. 2. The first negative electrode plate 11 includes a first current collector 11a and a first negative electrode active material layer 11b provided on two opposite surfaces of the first current collector 11a, and the second negative electrode plate 12 includes a second current collector 12a and a second negative electrode active material layer 12b provided on two opposite surfaces of the second current collector 12a. The first negative electrode active material layer 11b includes a first negative electrode active material, and the first negative electrode active material includes a silicon-based material. The second negative electrode active material layer 12b includes a second negative electrode active material, and the second negative electrode active material is graphite. The silicon-based material may include one or more of pure silicon, silicon-carbon, silicon-oxygen, silicon-oxygen-carbon, or silicon alloy.

When the silicon-based material is added to graphite and used as the negative electrode active material, it is easy to cause a sharp decline in a cycle life of a secondary battery and a sharp increase in cycling swelling. This is because the silicon-based material generates by-products, and these side reactions affect cycling of graphite. In this application, the negative electrode plate 10 is divided into a first negative electrode plate 11 with the negative electrode active material including a silicon-based material and a second negative electrode plate 12 with the negative electrode active material of graphite. Compared with the case where the negative electrode active materials of the negative electrode plates all include the silicon-based material and graphite, the influence of the silicon-based material on graphite is reduced, and the silicon-based material of the first negative electrode plate 11 does not have effects, such as swelling, cycle attenuation, and lithium plating, on the second negative electrode plate 12; at the same time, the electrode assembly 100 is configured as a stacked structure, so that the first negative electrode plate 11 including the silicon-based material can be placed at different positions in the electrode assembly 100, enabling the secondary battery to maintain high energy density while obtaining long cycle life and improving cycling swelling performance. That is, the energy density, cycle life, and cycling swelling performance of the secondary battery of this application are balanced.

In some embodiments, the first negative electrode active material is a silicon-based material and graphite, which helps improve energy density, cycle life, and cycling swelling performance.

The first negative electrode active material layer 11b and the second negative electrode active material layer 12b may further include a conductive agent and a binder. The conductive agent may include at least one of conductive carbon black, carbon nanotubes, carbon fibers, or graphene, and the binder may include at least one of styrene-butadiene rubber, polyvinyl alcohol, polytetrafluoroethylene, polyvinylidene fluoride, polyacrylic acid, or sodium carboxymethyl cellulose.

In some embodiments, the first negative electrode active material layer 11b includes the following components: 90wt% to 98wt% first negative electrode active material, 2wt% to 8wt% binder, and 0.5wt% to 2wt% conductive agent. In some embodiments, the binder of the first negative electrode active material layer 11b includes polyacrylic acid and sodium carboxymethyl cellulose, where a content of polyacrylic acid in the first negative electrode active material layer 11b is 2wt% to 6wt%, and a content of sodium carboxymethyl cellulose in the first negative electrode active material layer 11b is 1wt% to 2wt%. In some embodiments, the conductive agent is carbon nanotubes.

In some embodiments, the second negative electrode active material layer 12b includes a second negative electrode active material with a content of 96wt% to 99wt% and a binder with a content of 1wt% to 4wt%. In some embodiments, the binder of the second negative electrode active material layer 12b includes polyacrylic acid and sodium carboxymethyl cellulose or includes styrene-butadiene rubber and sodium carboxymethyl cellulose, where a content of polyacrylic acid or styrene-butadiene rubber in the second negative electrode active material layer 12b is 0.5wt% to 2wt%, and a content of sodium carboxymethyl cellulose in the second negative electrode active material layer 12b is 0.5wt% to 2wt%.

In some embodiments, a content of the silicon element in the first negative electrode active material layer 11b is 5wt% to 50wt%, which helps improve energy density, cycle life, and cycling swelling performance. Preferably, the content of the silicon element in the first negative electrode active material layer 11b is 5wt% to 30wt%.

In some embodiments, a coating weight of the first negative electrode active material layer 11b is 2 mg/cm² to 6 mg/cm².

In some embodiments, a coating weight of the second negative electrode active material layer 12b is 8 mg/cm² to 9 mg/cm², which helps improve energy density, cycle life, and cycling swelling performance.

In some embodiments, a compacted density of the first negative electrode active material layer 11b is 1.1 g/cm³ to 1.4 g/cm³, which helps improve energy density, cycle life, and cycling swelling performance.

In some embodiments, a compacted density of the second negative electrode active material layer 12b is 1.4 g/cm³ to 1.7 g/cm³, which helps improve energy density, cycle life, and cycling swelling performance.

Since the second negative electrode active material in the second negative electrode plate 12 is graphite and the silicon-based material is not included, a higher compacted density of the second negative electrode plate 12 can improve the energy density. The first negative electrode active material in the first negative electrode plate 11 is a silicon-based material and graphite. Since the silicon-based material provides more capacity, to match the capacity of the second negative electrode active material layer 12b, its compacted density is slightly lower than the compacted density of the second negative electrode active material layer 12b. Compared with the case where all negative electrode plates include silicon, a weighted average of the compacted densities of the first negative electrode plate 11 and the second negative electrode plate 12 is higher, thereby improving the energy density of the entire battery.

The first current collector 11a and the second current collector 12a may use negative electrode current collectors well known in the art, such as copper foil, copper alloy foil, or composite current collector.

Refer to FIG. 2. The positive electrode plate 20 includes a positive electrode current collector 21 and a positive electrode active material layer 22 provided on at least one surface of the positive electrode current collector 21. The positive electrode current collector 21 may use a positive electrode current collector well known in the art, such as copper foil, copper alloy foil, or composite current collector. The positive electrode active material layer 22 includes a positive electrode active material, a conductive agent, and a binder. The positive electrode active material includes one or more of lithium cobalt oxide, lithium nickel cobalt manganese oxide, lithium manganate, lithium iron phosphate, or lithium manganese iron phosphate. The conductive agent may use a conductive agent well known in the art, for example, the conductive agent includes one or more of Ketjen black, conductive carbon black, acetylene black, graphene, carbon nanotubes, or carbon fibers. The binder may use a binder well known in the art, for example, the binder includes one or more of polyvinylidene fluoride, a vinylidene fluoride-hexafluoropropylene copolymer, polyamide, polyacrylonitrile, polyacrylate, polyacrylic acid, polyacrylate acid salt, or sodium carboxymethyl cellulose.

The separator may be a separator well known in the art. For example, the separator may be a film selected from one or more materials of polyethylene, polypropylene, non-woven fabric, or poly fiber.

The electrolyte may be an electrolyte well known in the art. For example, the electrolyte is selected from one or more of carbonate organic esters such as ethylene carbonate, propylene carbonate, dimethyl carbonate, diethyl carbonate, and methyl ethyl carbonate as solvents for electronic insulation and ion conduction, and contains one or more lithium salts of LiPF₆, LiBF₄, LiBOB, LiAsF₆, Li(CF₃SO₂)₂N, LiCF₃SO₃, and LiCTO₄ as solutes.

The housing may be a housing well known in the art. For example, the housing may be a packaging bag obtained by encapsulation with packaging film, such as an aluminum-plastic film or a steel-plastic film; or the housing may be a metal housing, such as a steel shell or an aluminum shell.

Refer to FIG. 1 and FIG. 2. In the thickness direction T, the positive electrode plate 20 is located at outermost layers on two opposite sides of the electrode assembly 100, and the positive electrode plate 20 located at the outermost layer is a single-sided coated electrode plate. In this application, the single-sided coated electrode plate refers to an electrode plate where only one surface is coated with an active material. It can be understood that a surface of the single-sided coated electrode plate that is not coated with the active material can be coated with another functional layer, such as an insulating layer. Setting the outermost layer of the electrode assembly 100 in the thickness direction T as the positive electrode plate enables full utilization of the negative electrode active materials of adjacent negative electrode plates, improving the energy density. Setting the positive electrode plate located at the outermost layer as a single-sided coated electrode plate enables full utilization of the positive electrode active material of the positive electrode plate, improving the energy density.

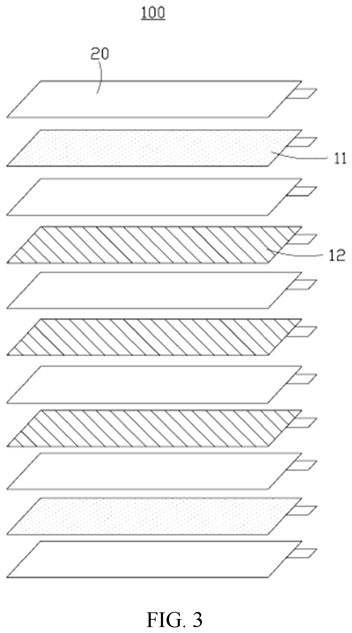

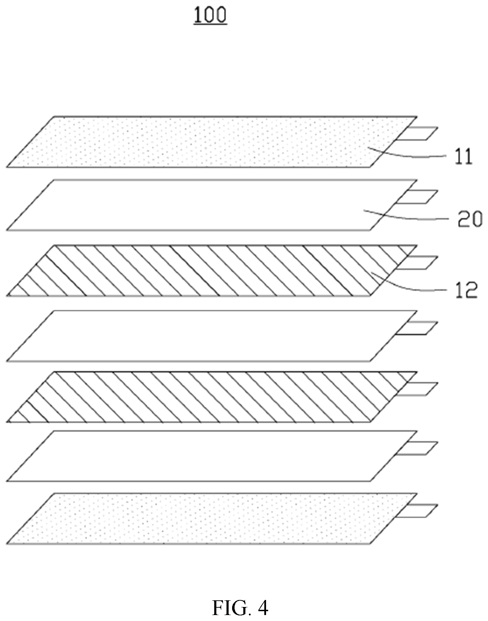

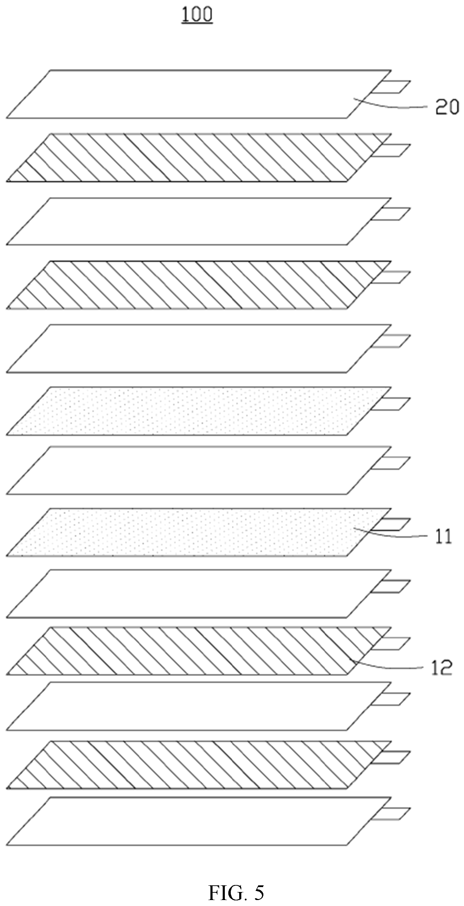

In some embodiments, in the thickness direction T, the first negative electrode plate 11 is located on at least one side of the electrode assembly 100. In this application, the first negative electrode plate 11 being located on at least one side of the electrode assembly 100 in the thickness direction T means that, without considering the positions of the separator and the positive electrode plate, the first negative electrode plate 11 is located on one side or two sides of the electrode assembly 100. Refer to FIG. 1 and FIG. 2. In the thickness direction T, considering the position of the positive electrode plate 20, the first negative electrode plate 11 is located at a sub-outermost layer on one side of the electrode assembly 100. Without considering the positions of the positive electrode plate 20 and the separator, the first negative electrode plate 11 is located on one side of the electrode assembly 100. The first negative electrode plate 11 located at the sub-outermost layer is a double-sided coated electrode plate. Refer to FIG. 3. In another embodiment, considering the position of the positive electrode plate 20, first negative electrode plates 11 are located at sub-outermost layers on two opposite sides of the electrode assembly 100 in the thickness direction T; without considering the positive electrode plate 20 and the separator, first negative electrode plates 11 are located on two opposite sides of the electrode assembly 100. Refer to FIG. 4. In still another embodiment, in the thickness direction T, the first negative electrode plate 11 is located at outermost layers of two opposite sides of the electrode assembly 100. In this application, the first negative electrode plate 11 being located in the middle of the electrode assembly means that, without considering the positions of the separator and the positive electrode plate, positions of the first negative electrode plates 11 are not stacked on two sides of the electrode assembly, but stacked in the middle region of the electrode assembly. Refer to FIG. 5. In yet another embodiment, in the thickness direction T, the first negative electrode plate 11 is located in the middle of the electrode assembly 100.

For ease of manufacturing, when energy density and swelling meet the requirements, it is preferred to set the first negative electrode plate 11 on at least one side of the electrode assembly (without considering the positions of the separator and the positive electrode plate 20), as shown in FIG. 1, FIG. 3, FIG. 6, and FIG. 7.

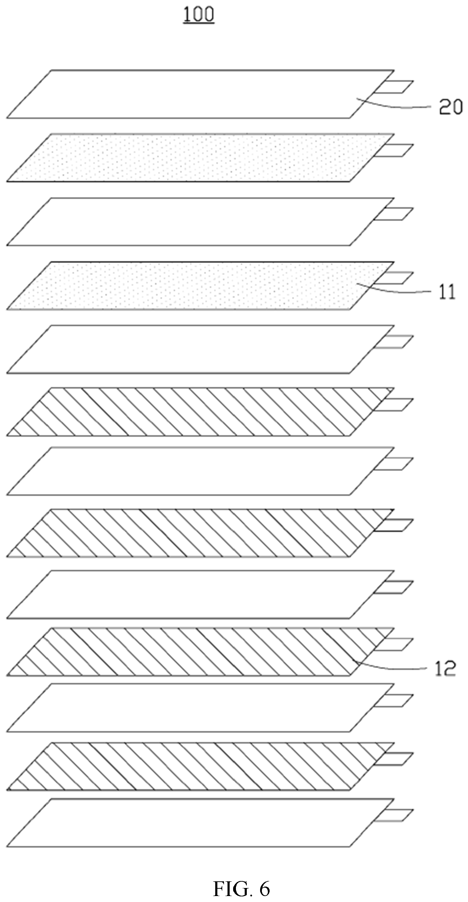

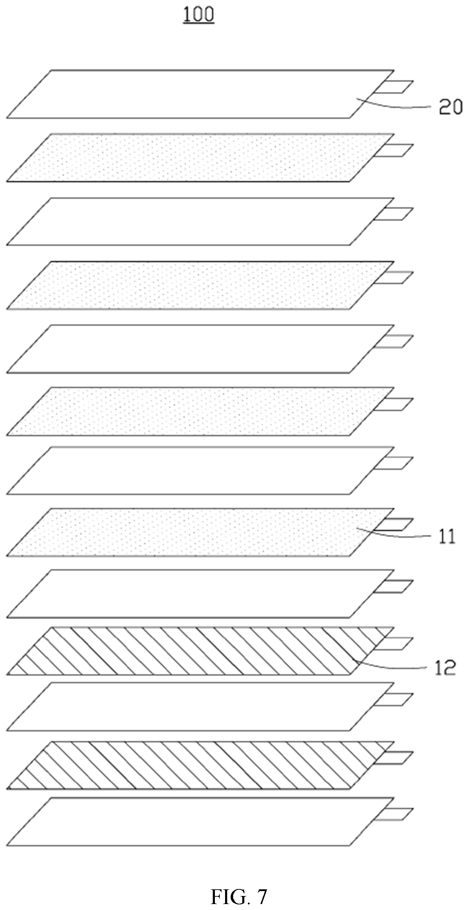

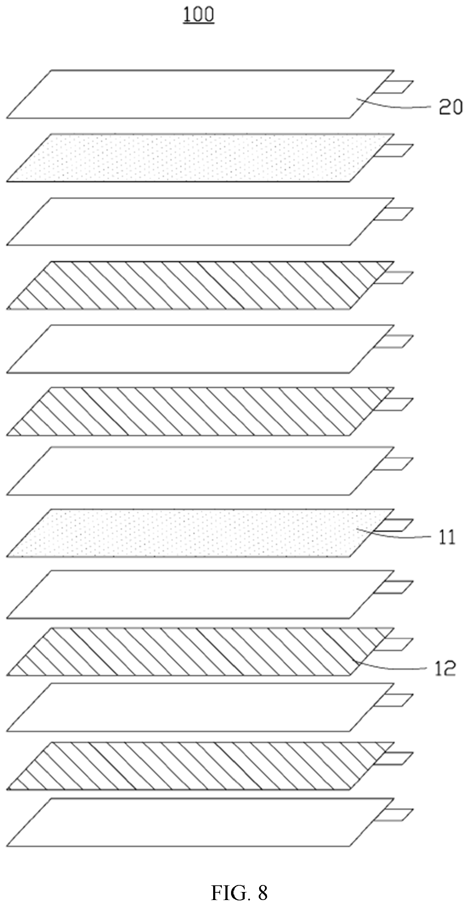

In some embodiments, a quantity of the first negative electrode plates 11 is N1, and a quantity of the second negative electrode plates 12 is N2, where N1:N2=1/X, 1≤X≤50, and X is an integer. In the case where the quantities of the first negative electrode plates 11 and the second negative electrode plates 12 are both greater than 1, multiple first negative electrode plates 11 can be sequentially stacked in the thickness direction T on at least one side of the electrode assembly 100, and correspondingly, multiple second negative electrode plates 12 are sequentially stacked in the thickness direction T on another side or in the middle of the electrode assembly 100. As shown in FIG. 6, two first negative electrode plates 11 are sequentially stacked on one side of the electrode assembly 100 in the thickness direction T, and four second negative electrode plates 12 are sequentially stacked on another side of the electrode assembly 100 in the thickness direction T. As shown in FIG. 3, two first negative electrode plates 11 are respectively provided on two opposite sides of the electrode assembly 100 in the thickness direction T, and three second negative electrode plates 12 are sequentially stacked in the middle of the electrode assembly 100 in the thickness direction T. In another embodiment, more than one first negative electrode plates 11 are provided on two sides of the multiple stacked second negative electrode plates 12, and multiple first negative electrode plates 11 on each side are sequentially stacked. In another embodiment, multiple first negative electrode plates 11 are sequentially stacked in the middle of the electrode assembly 100 in the thickness direction T, and correspondingly, multiple second negative electrode plates 12 are sequentially stacked on at least one side of the electrode assembly 100 in the thickness direction T. As shown in FIG. 5, two second negative electrode plates 12 are sequentially stacked on one side of the electrode assembly 100 in the thickness direction T, another two second negative electrode plates 12 are sequentially stacked on another side of the electrode assembly in the thickness direction T, and two first negative electrode plates 11 are sequentially stacked in the middle of the electrode assembly 100 in the thickness direction T. As shown in FIG. 7, two second negative electrode plates 12 are sequentially stacked on one side of the electrode assembly 100 in the thickness direction T, and four first negative electrode plates 11 are sequentially stacked on another side of the electrode assembly 100 in the thickness direction T. In another embodiment, multiple first negative electrode plates 11 and multiple second negative electrode plates 12 are alternately stacked in the thickness direction T. As shown in FIG. 8, every two second negative electrode plates 12 and one first negative electrode plate 11 are alternately stacked in the thickness direction T, that is, two second negative electrode plates 12 and one first negative electrode plate 11 form a minimum unit and then are sequentially stacked.

An embodiment of this application further provides an electronic apparatus, which includes the secondary battery in this application. The electronic apparatus can be any electrical apparatus using a secondary battery, for example, the electronic apparatus may be a mobile phone, a portable device, a notebook computer, an electric bicycle, an electric vehicle, a ship, a spacecraft, an electric toy, an electric tool, and the like.

The following lists some specific examples and comparative examples to better illustrate this application, where lithium-ion batteries are used as examples.

### Comparative example 1

Preparation of positive electrode plate: Lithium cobalt oxide, conductive carbon black, and polyvinylidene fluoride were mixed in a weight ratio of 97:1.4:1.6, and N-methylpyrrolidone was added as a solvent, which are stirred uniformly to obtain a slurry with a solid content of 72wt%. The slurry was uniformly applied to an aluminum foil with a coating thickness of 80 µm; dried at 85°C; then cold-pressed, cut, and slit; and dried under vacuum at 85°C for 4 hours to obtain a positive electrode plate.

Preparation of negative electrode plate: 97.5wt% negative electrode active material, 1.5wt% polyacrylic acid, 0.5wt% sodium carboxymethyl cellulose, and 0.5wt% carbon nanotubes were mixed and applied to a copper foil to form a negative electrode active material layer, to obtain a negative electrode plate. The negative electrode active material includes 5wt% silicon-based material (the silicon-based material is silicon-carbon) and 95wt% graphite (a proportion of the silicon element in the silicon-based material is 45%, that is, a proportion of a mass of the silicon element in a single negative electrode plate to a mass of the negative electrode active material layer is 2.25%), a coating weight of the negative electrode active material layer is 7 mg/cm², and a compacted density of the negative electrode active material layer is 1.45 g/cm³. In the lithium-ion battery, a percentage content of the silicon element in the overall negative electrode active material layer is 19% (that is, a percentage of a total mass of the silicon element in all negative electrode plates to a total mass of active material layers of all negative electrode plates is 19%).

Preparation of separator: A polyethylene film with a thickness of 7 µm was selected as the separator.

Preparation of electrolyte: In a dry argon atmosphere glove box, ethylene carbonate (EC), propylene carbonate (PC), and diethyl carbonate (DEC) were mixed in a mass ratio of EC:PC:DEC=1:1:1, and after dissolving and fully stirring, lithium salt LiPF₆ was added and mixed uniformly to obtain an electrolyte, where a mass of lithium salt LiPF₆ accounts for 12% of a total mass of the electrolyte.

Preparation of lithium-ion battery: The positive electrode plate, separator, and negative electrode plate were sequentially stacked, with the separator between the positive electrode plate and the negative electrode plate for separation, and an electrode assembly was obtained by stacking. The negative electrode plate has 60 layers. The electrode assembly was placed in an outer aluminum-plastic film packaging where water was removed at 80°C and the above electrolyte was injected, and the packaging was sealed. After formation, degassing, trimming, and other process steps, a lithium-ion battery was obtained.

### Examples 1 to 8

The differences from Comparative example 1 are that the negative electrode plate was divided into a first negative electrode plate with a negative electrode active material including a silicon-based material and a second negative electrode plate with a negative electrode active material of graphite; the contents of various components in the first negative electrode plate were different; the contents of various components in the second negative electrode plate were different; the coating weight or compacted density of the first negative electrode active material layer of the first negative electrode plate was different; the coating weight or compacted density of the second negative electrode active material layer of the second negative electrode plate was different; the ratio N1/N2 of the quantities of the first negative electrode plates to the second negative electrode plates was different; or the position of the first negative electrode plate in the electrode assembly was different. In each example and comparative example, the content of the silicon element in the lithium-ion battery was the same, that is, the proportion of the total mass of the silicon element in all negative electrode plates (the first negative electrode plate and the second negative electrode plate) to the total mass of the active material layers of all negative electrode plates (the first negative electrode plate and the second negative electrode plate) was the same. The parameters of Comparative example 1 and Examples 1 to 8 are shown in Table 1. It should be noted that the components of the first negative electrode plate in Examples 1 to 8 are the same as those of the negative electrode plate in Comparative example 1, so the first negative electrode plate in Table 1 also refers to the negative electrode plate of Comparative Example 1.

Energy density test, cycling performance test, cycling thickness swelling test, and the like were performed on the lithium-ion batteries of each comparative example and example. The test results are shown in Table 1.

Energy density test: At 25°C, the lithium-ion battery was charged at a constant rate of 0.2C to 4.5 V; then charged with the constant voltage until the battery was fully charged; left standing for 30 min; and then discharged at 0.2C until the battery voltage reached 3.0 V. A discharge energy at this time was recorded. A ratio of the discharge energy of the lithium-ion battery to a battery volume was a volume energy density of the lithium-ion battery. The volume energy density of the lithium-ion battery of Comparative example 1 was used as a reference value, and an improvement ratio of the volume energy density of the lithium-ion battery of each example relative to the volume energy density of the lithium-ion battery of Comparative example 1 was calculated.

Cycling performance test: A battery voltage internal resistance tester or a multimeter was used to test a charge-discharge cutoff voltage of the lithium-ion battery, and the measured charge-discharge cutoff voltage was 3.0 V to 4.5 V. At 25°C, the lithium-ion battery was charged at a constant current of 3C to 4.5 V; then charged with the constant voltage until the battery was fully charged; left standing for 30 min; and then discharged at 0.5C until the battery voltage reached 3.0 V. This charge-discharge process was taken as one cycle, and a capacity at this time was recorded as an initial capacity. When the capacity first attenuated to 80% of the initial capacity (or less than 80% of the initial capacity), a corresponding number of cycles was recorded.

Cycling thickness swelling test: At 25°C, the lithium-ion battery was charged at a constant current of 3C to 4.5 V; and then charged with the constant voltage until the battery was fully charged. A flat plate thickness gauge was used to test a thickness of the lithium-ion battery and recorded as an initial thickness. Then the battery was discharged at 0.5C until the battery voltage reached 3.0 V. This was one charge-discharge cycle. After 800 cycles, a thickness of the lithium-ion battery was recorded as a thickness after cycling. An improvement ratio of the thickness after cycling relative to the initial thickness was calculated, that is, a thickness swelling rate of the lithium-ion battery.

Silicon element content test: The lithium-ion battery was disassembled to obtain the negative electrode plate, soaked in a dimethyl carbonate (DMC) solution for 15 min and then dried for later use; the negative electrode active material layer was scraped off to make powder; and inductively coupled plasma (ICP) technology was used to test the Si element content.

Coating weight and compacted density test: The lithium-ion battery was disassembled to obtain the negative electrode plate. Only the negative electrode active material layer on one side of the negative electrode plate was retained, and was punched and then weighed, and a thickness was measured. An area S of the negative electrode plate was obtained by punching. The weight m of the negative electrode active material layer was obtained by weighing and subtracting a mass of the negative electrode current collector. The thickness h of the negative electrode active material layer was obtained by measuring the thickness and subtracting the thickness of the negative electrode current collector. The coating weight of the negative electrode active material layer on this side can be calculated according to the coating weight formula G=m/S. The compacted density of the negative electrode active material layer on this side can be calculated according to the compacted density formula PD=m/S/h.

**Table 1**

| | | Comparative example 1 | Example 1 | Example 2 | Example 3 | Example 4 | Example 5 | Example 6 | Example 7 | Example 8 |
|---|---|---|---|---|---|---|---|---|---|---|
| First negative electrode plate | Proportion of silicon element in first negative electrode active material layer (wt%) | 2.25 | 5.4 | 15.75 | 22.5 | 29.25 | 45 | 15.75 | 15.75 | 22.5 |
| | Silicon-based material (wt%) | 4.875 | 11.56 | 33.25 | 47.25 | 61.1 | 90 | 33.25 | 33.25 | 47.25 |
| | Graphite (wt%) | 92.625 | 84.94 | 61.75 | 47.25 | 32.9 | 0 | 61.75 | 61.75 | 47.25 |
| | Mass ratio of silicon-based material to graphite | 5:95 | 12:88 | 35:65 | 50:50 | 65:35 | 100:0 | 35:65 | 35:65 | 50:50 |
| | Polyacrylic acid (wt%) | 1.5 | 2 | 3.5 | 4 | 5 | 6 | 3.5 | 3.5 | 4 |
| | Sodium carboxymethyl cellulose (wt%) | 0.5 | 1 | 1 | 1 | 1.25 | 2 | 1 | 1 | 1 |
| | Carbon nanotubes (wt%) | 0.5 | 0.5 | 0.5 | 0.5 | 0.75 | 2 | 0.5 | 0.5 | 0.5 |
| | Coating weight (mg/cm²) | 7 | 5.9 | 3.08 | 2.17 | 2 | 2 | 3.08 | 3.08 | 2.17 |
| | Compacted density (g/cm³) | 1.45 | 1.42 | 1.3 | 1.15 | 1.05 | 1.05 | 1.3 | 1.3 | 1.15 |
| Second negative electrode plate | Graphite (wt%) | / | 97.5 | 97.5 | 97.5 | 97.5 | 97.5 | 97.5 | 97.5 | 97.5 |
| | Polyacrylic acid (styrene-butadiene rubber) (wt%) | / | 1.5 | 1.5 | 1.5 | 1.5 | 1.5 | 1.5 | 1.5 | 1.5 |
| | Sodium carboxymethyl cellulose (wt%) | / | 1 | 1 | 1 | 1 | 1 | 1 | 1 | 1 |
| | Coating weight (mg/cm²) | / | 8.16 | 9 | 8.63 | 8.27 | 8.03 | 9 | 9 | 8.63 |
| | Compacted density (g/cm³) | / | 1.52 | 1.52 | 1.52 | 1.52 | 1.52 | 1.52 | 1.52 | 1.52 |
| N1/N2 | | / | 1:1 | 1:2 | 1:3 | 1:4 | 1:5 | 1:3 | 1:3 | 1:3 |
| Total number of layers | | 60 | 30+30 | 20+40 | 15+45 | 12+48 | 10+50 | 15+45 | 15+45 | 15+45 |
| Position of first negative electrode plate | | / | Sequentially stacked on one side | Sequentially stacked on one side | Sequentially stacked on one side | Sequentially stacked on one side | Sequentially stacked on one side | Alternately stacked | Sequentially stacked on two sides | Sequentially stacked in the middle |
| Energy density improvement ratio | | 0% | 0.5% | 1.5% | 0.7% | 1.1% | 0.4% | 1.5% | 1.5% | 1.5% |
| Cycles corresponding to capacity attenuating to 80% | | 780 | 830 | 970 | 850 | 880 | 750 | 1000 | 880 | 900 |

| | Comparative example 1 | Example 1 | Example 2 | Example 3 | Example 4 | Example 5 | Example 6 | Example 7 | Example 8 | |
|---|---|---|---|---|---|---|---|---|---|---|
| Thickness swelling rate after 800 cycles | 12.2% | 11.1% | 9.5% | 10.5% | 10.2% | 10.7% | 9% | 10.1% | 9.8% | |

From Comparative example 1 and Examples 1 to 8, it can be learned that, under the condition of the same silicon element content, replacing part of the negative electrode plates in Comparative example 1 with the second negative electrode plate with the negative electrode active material being graphite improves the energy density, increases the number of cycles, and reduces the thickness swelling rate. When the content of the silicon element in the first negative electrode active material layer of a single first negative electrode plate is 5wt% to 30wt%, better energy density, a higher number of cycles, and a lower thickness swelling rate can be achieved.

Through comparison of Examples 1 to 5, it can be learned that, under the condition of the same silicon element content, as N1/N2 increases, the energy density improvement ratio shows a trend of first increasing and then decreasing, the number of cycles shows a trend of first increasing and then decreasing, and the thickness swelling rate shows a trend of first decreasing and then increasing. In Example 2, when N1:N2=1:2, the effects on energy density, number of cycles, and thickness swelling rate are the best.

Through comparison of Examples 2 and 6 to 8, it can be learned that when the first negative electrode plate and the second negative electrode plate are alternately stacked in the thickness direction of the electrode assembly, the cycling swelling rate is lower.

The above disclosed are only preferred embodiments of this application, and certainly, cannot be used to limit this application. Therefore, equivalent changes made according to this application still fall within the scope covered by this application.

## Claims

1. A secondary battery, comprising an electrode assembly, wherein the electrode assembly comprises a positive electrode plate, a separator, and a negative electrode plate that are alternately stacked in a thickness direction of the electrode assembly, the negative electrode plate comprises a first negative electrode plate and a second negative electrode plate, the first negative electrode plate comprises a first current collector and a first negative electrode active material layer provided on at least one surface of the first current collector, the second negative electrode plate comprises a second current collector and a second negative electrode active material layer provided on at least one surface of the second current collector, the first negative electrode active material layer comprises a first negative electrode active material, the first negative electrode active material comprises a silicon-based material, the second negative electrode active material layer comprises a second negative electrode active material, and the second negative electrode active material is graphite.

2. The secondary battery according to claim 1, wherein a content of the silicon element in the first negative electrode active material layer is 5wt% to 50wt%.

3. The secondary battery according to claim 2, wherein the content of the silicon element in the first negative electrode active material layer is 5wt% to 30wt%.

4. The secondary battery according to claim 1, wherein a coating weight of the first negative electrode active material layer is 2 mg/cm² to 6 mg/cm².

5. The secondary battery according to claim 1, wherein a compacted density of the first negative electrode active material layer is 1.1 g/cm³ to 1.4 g/cm³.

6. The secondary battery according to claim 1, wherein a coating weight of the second negative electrode active material layer is 8 mg/cm² to 9 mg/cm².

7. The secondary battery according to claim 1, wherein in the thickness direction, the first negative electrode plate is located on at least one side of the electrode assembly.

8. The secondary battery according to claim 1, wherein in the thickness direction, the first negative electrode plate and the second negative electrode plate are alternately arranged.

9. The secondary battery according to claim 1, wherein in the thickness direction, the first negative electrode plate is located in the middle of the electrode assembly.

10. The secondary battery according to claim 1, wherein the first negative electrode active material layer comprises 90wt% to 98wt% first negative electrode active material, 2wt% to 6wt% polyacrylic acid, 1wt% to 2wt% sodium carboxymethyl cellulose, and 0.5wt% to 2wt% carbon nanotubes.

11. The secondary battery according to claim 1, wherein the second negative electrode active material layer comprises 96wt% to 99wt% second negative electrode active material, 0.5wt% to 2wt% polyacrylic acid or styrene-butadiene rubber, and 0.5wt% to 2wt% sodium carboxymethyl cellulose.

12. An electronic apparatus, comprising the secondary battery according to any one of claims 1 to 11.
